# EUROPÄISCHE PATENTSCHRIFT

(11) **EP 4 095 389 B1**
(45) Veröffentlichungstag und Bekanntmachung des Hinweises auf die Patenterteilung: **06.11.2024**
(21) Anmeldenummer: 22173590.5
(22) Anmeldetag: 16.05.2022
(51) Int. Cl.: F04D 17/16, F04D 25/06, F04D 25/08, F04D 29/059, F04D 29/08, F04D 29/10, F04D 29/62, F16J 15/3228, H02K 5/124

(54) **WELLENDICHTUNG ZUM ABDICHTEN EINES WELLENDURCHBRUCHS**
SHAFT SEAL FOR SEALING A SHAFT OPENING
JOINT D'ÉTANCHÉITÉ D'ARBRE PERMETTANT DE RENDRE ÉTANCHE UN ORIFICE D'ARBRE

(30) Priorität: 27.05.2021 DE 102021113758
(43) Veröffentlichungstag der Anmeldung: 30.11.2022
(73) Patentinhaber: ebm-papst Landshut GmbH, 84030 Landshut (DE)
(72) Erfinder: Weltzer, Jan, 84036 Landshut (DE); Sachsenhauser, Andreas, 84034 Landshut (DE); Hertreiter, Martin, 84180 Loiching (DE); Schmidt, Tobias, 84030 Egolding (DE)
(74) Vertreter: Otten, Roth, Dobler & Partner mbB Patentanwälte

(56) Entgegenhaltungen:
- EP-A1- 2 466 147
- US-A1- 2015 152 872

## Beschreibung

### Stand der Technik

Radialgebläse sind aus dem Stand der Technik bereits bekannt.

Ein bekanntes Radialgebläse umfasst ein Gebläsegehäuse und einen außerhalb des Gebläsegehäuses angeordneten Elektromotor. Bei den bekannten Radialgebläsen ist eine Welle des Elektromotors über eine Wellendichtung in das Gebläsegehäuse geführt. Die Wellendichtung dichtet dabei ein Inneres des Gebläsegehäuse gegenüber der Umgebung des Gebläsegehäuses ab.

EP 2 466 147 A1 und US 2015/152872 A1 offenbaren eine Wellendichtung zum Abdichten eines Wellendurchbruchs eines Radialgebläses gemäß dem Stand der Technik.

Nachteilig an den bekannten Radialgebläsen ist, dass die Gebläsegehäuse ab einem gewissen Druck, insbesondere aufgrund einer Undichtigkeit im Bereich der Wellendichtung, eine Leckage aufweisen und damit undicht sind. Dies ist insbesondere aufgrund von Sicherheitserwägungen nachteilig.

### Aufgabe und Vorteile der Erfindung

Der Erfindung liegt die Aufgabe zugrunde, eine verbesserte Wellendichtung bereitzustellen, welche insbesondere im angeordneten Zustand an einem Gebläse bei höheren Drücken im Gebläsegehäuse des Gebläses eine vergleichsweise verbessertes Dichtverhalten aufweist.

Diese Aufgabe wird durch die Merkmale des Anspruchs 1 gelöst.

In den abhängigen Ansprüchen sind vorteilhafte und zweckmäßige Ausbildungsformen der Erfindung genannt.

Die Erfindung geht von einer Wellendichtung zum Abdichten eines Wellendurchbruchs eines Gebläses, insbesondere Wellendichtung zum Abdichten eines Wellendurchbruchs eines Radialgebläses, aus, wobei die Wellendichtung eine Symmetrieachse aufweist, wobei die Wellendichtung an einem in Richtung der Symmetrieachse radial innenliegenden ersten Ende einen Kragen aufweist, wobei die Wellendichtung ausgehend von dem Kragen in radialer Richtung weg von der Symmetrieachse aufeinanderfolgend einen Nutabschnitt, einen Winkelabschnitt und eine Dichtlippe umfasst.

Vorteilhafterweise ist die Wellendichtung als eine Gebläsewellendichtung vorhanden. Beispielsweise ist die Wellendichtung als eine Radialgebläsewellendichtung vorhanden.

Vorteilhafterweise ist der Nutabschnitt in Form eines Topfes ausgebildet. Beispielsweise entspricht der Nutabschnitt in seiner Geometrie zumindest annähernd der eines Topfes.

Bevorzugterweise umschließt der Kragen mit seinem ersten Ende eine insbesondere zylinderförmige Durchgangsöffnung.

Vorteilhafterweise ist das erste Ende des Kragens der Symmetrieachse zugewandt. Beispielsweise ist das erste Ende des Kragens der Symmetrieachse am nächsten angeordnet. Vorteilhafterweise ist die Durchgangsöffnung zylindersymmetrisch ausgebildet, wobei z.B. die Symmetrieachse der Wellendichtung auf die Symmetrieachse der Durchgangsöffnung fällt. Beispielsweise ist im angeordneten Zustand der Wellendichtung am Gebläse eine Motorwelle des Gebläses durch die Durchgangsöffnung durchgeführt vorhanden. Vorteilhafterweise erstreckt sich die Motorwelle im angeordneten Zustand der Wellendichtung von einer Motorseite des Gebläses bis zu einer Gebläseradseite des Gebläses. Beispielsweise verbindet die Wellendichtung im angeordneten Zustand am Gebläse die Motorseite dichtend mit der Gebläseradseite. Zum Beispiel verbindet die Wellendichtung im angeordneten Zustand am Gebläse die Motorseite dichtend mit einem Gebläseradgehäuse des Gebläse. Beispielsweise bildet die Wellendichtung, insbesondere die Dichtlippe, im angeordneten Zustand der Wellendichtung am Gebläse eine Dichtung zwischen einem Motorgehäuse des Gebläses und dem Gebläseradgehäuse. Vorteilhafterweise ist das Gebläseradgehäuse als ein Spiralgehäuse und/oder ein Lüftergehäuse ausgebildet.

Gemäß der erfindungsgemäßen Wellendichtung ist die Dichtlippe mit einem ersten Ende mit dem Winkelabschnitt verbunden und abgewinkelt zum Winkelabschnitt vorhanden, wobei ausgehend vom Winkelabschnitt die Dichtlippe sich in radialer Richtung schräg verlaufend in Richtung Symmetrieachse erstreckt, wobei die Dichtlippe ein zweites Ende aufweist, welches beabstandet zum Winkelabschnitt vorhanden ist, wobei ein erstes Ende des Kragens und das zweite Ende der Dichtlippe eine Ebene definieren, wobei der Winkelabschnitt auf einer Unterseite der Ebene und der Nutabschnitt auf einer Oberseite der Ebene vorhanden ist.

Das heißt, ausgehend vom Winkelabschnitt erstreckt sich die Dichtlippe in Richtung des zweiten Endes der Dichtlippe und in Richtung Symmetrieachse in radialer Richtung schräg verlaufend. Das erste Ende des Kragens und das zweite Ende der Dichtlippe spannen die Ebene auf. Beispielsweise spannen ein Punkt oder ein Bereich des ersten Ende des Kragens und ein Punkt oder ein Bereich des zweiten Endes der Dichtlippe die Ebene auf. Hierdurch ist die Wellendichtung selbstverstärkend ausgebildet, d.h. im angeordneten Zustand der Wellendichtung am Gebläse und bei steigendem Druck im Innenraum des Gebläseradgehäuses des Gebläses steigt die Dichtwirkung der Wellendichtung durch die erfindungsgemäße Ausbildung der Wellendichtung an. Also ist eine dynamische Dichtwirkung der Wellendichtung im angeordneten Zustand am Gebläse erzielbar. Vorteilhafterweise ist hierdurch auch bei einem Unterdruck im Gebläseradgehäuse eine Dichtwirkung der Wellendichtung im angeordneten Zustand erhalten.

Vorteilhafterweise ist der Kragen rotationssymmetrisch um die Symmetrieachse ausgebildet vorhanden. Beispielsweise verläuft die Ebene durch einen Punkt des Kragens. Beispielsweise verläuft die Ebene durch einen Punkt des ersten Endes des Kragens. Bevorzugterweise verläuft die Ebene durch einen Punkt des zweiten Endes der Dichtlippe. Beispielsweise erstreckt sich die Ebene in einer Richtung senkrecht zu einer Erstreckungsrichtung der Symmetrieachse. Beispielsweise erstreckt sich die Ebene in einer Richtung senkrecht zu einer Verbindungslinie, welche durch den Punkt des Kragens und den Punkt des zweiten Endes der Dichtlippe verläuft. Vorteilhafterweise verläuft die Ebene durch den Punkt des Kragens und durch zwei voneinander beabstandete Punkte des zweiten Endes der Dichtlippe. Beispielsweise tangiert die Ebene das zweite Ende der Dichtlippe. Zum Beispiel tangiert die Ebene die Dichtlippe. Vorteilhafterweise schneidet die Symmetrieachse die Ebene.

Vorteilhafterweise bildet die Oberseite der definierten Ebene eine Dichtungsgebläseradseite der Wellendichtung und die Unterseite der definierten Ebene eine Dichtungsmotorseite der Wellendichtung. Beispielsweise sind die Dichtungsmotorseite und die Dichtungsgebläseradseite gegenüberliegend vorhanden. Zum Beispiel bilden im angeordneten Zustand der Wellendichtung am Gebläse die Dichtungsgebläseradseite der Wellendichtung die Gebläseradseite des Gebläses und die Dichtungsmotorseite der Wellendichtung die Motorseite des Gebläses.

Beispielsweise befindet sich zumindest ein überwiegender Teil der Dichtlippe und/oder ein überwiegender Teil des Winkelabschnitts in axialer Richtung relativ zur Symmetrieachse gesehen unterhalb der Ebene, z.B. im Bereich der Unterseite. Zum Beispiel befindet sich zumindest ein überwiegender Teil des Nutabschnitts in axialer Richtung relativ zur Symmetrieachse gesehen oberhalb der Ebene, z.B. im Bereich der Oberseite. Vorteilhafterweise erstreckt sich der Winkelabschnitt in einem ersten Winkelabschnittsbereich ausgehend vom ersten Ende des Kragens in radialer Richtung nach außen und in axialer Richtung in Richtung weg von der Ebene schräg verlaufend. Beispielsweise erstreckt sich der erste Winkelabschnittsbereich ausgehend vom ersten Ende des Kragens in radialer Richtung nach außen und in axialer Richtung weg von der Gebläseradseite. Beispielsweise erstreckt sich der Winkelabschnitt mit einem zweiten Winkelabschnittsbereich in radialer Richtung nach außen und in axialer Richtung in zur Ebene schräg verlaufend. Beispielsweise erstreckt sich der zweite Winkelabschnittsbereich ausgehend vom ersten Winkelabschnittsbereich in radialer Richtung nach außen und in axialer Richtung hin zur Gebläseradseite und/oder hin zur Ebene. Vorteilhafterweise sind der erste und der zweite Winkelabschnittsbereich des Winkelabschnitts zueinander abgewinkelt vorhanden.

Bevorzugterweise ist der erste Winkelabschnittsbereich unmittelbar mit dem Nutabschnitt verbunden. Beispielsweise ist der erste Winkelabschnittsbereich abgewinkelt zum Nutabschnitt vorhanden. Denkbar ist auch, dass der erste Winkelabschnittsbereich gelenkartig oder scharnierartig mit dem Nutabschnitt verbunden ist.

Beispielsweise schließt der zweite Winkelabschnittsbereich an einer ersten Verbindungsstelle an den ersten Winkelabschnittsbereich an. Vorteilhafterweise ist der zweite Winkelabschnittsbereich mit dem ersten Winkelabschnittsbereich unmittelbar verbunden. Vorteilhafterweise ist die erste Verbindungsstelle gelenkartig oder scharnierartig ausgebildet, sodass der zweite Winkelabschnittsbereich um eine Achse der ersten Verbindungsstelle relativ zum ersten Winkelabschnittsbereich bewegbar ist.

Bevorzugterweise ist die Dichtlippe an einem zur Symmetrieachse radial außenliegenden zweiten Ende der Wellendichtung vorhanden.

Vorteilhafterweise ist die Dichtlippe mit dem ersten Ende über eine zweite Verbindungsstelle mit dem Winkelabschnitt verbunden. Vorteilhafterweise ist die zweite Verbindungsstelle gelenkartig oder scharnierartig ausgebildet, sodass die Dichtlippe um eine Achse der zweiten Verbindungsstelle relativ zum Winkelabschnitt bewegbar ist. Vorteilhafterweise ist die zweite Verbindungsstelle klappscharnierartig ausgebildet. Z.B. ist die zweite Verbindungsstelle als ein Klappscharnier vorhanden.

Vorteilhafterweise ist die Wellendichtung derart ausgebildet, dass das zweite Ende der Dichtlippe in jeder Position, insbesondere im montierten Zustand, beabstandet zum Winkelabschnitt vorhanden ist. Beispielsweise ist die Wellendichtung derart ausgebildet, dass das zweite Ende der Dichtlippe in jeder Position, insbesondere im montierten Zustand, den Winkelabschnitt nicht berührt. Vorteilhafterweise ist die Dichtlippe verformbar vorhanden. Denkbar ist, dass die Dichtlippe biegbar ist. Vorteilhafterweise ist die Dichtlippe derart biegbar vorhanden, dass das zwei Ende der Dichtlippe relativ zum ersten Ende der Dichtlippe biegbar ist.

Beispielsweise ist im angeordneten Zustand der Wellendichtung am Gebläse der Winkelabschnitt verformt vorhanden, sodass die Dichtlippe am Gebläseradgehäuse dichtend anliegt und unter einer Vorspannung steht. Zum Beispiel ist die Wellendichtung derart ausgebildet, dass im angeordneten Zustand der Wellendichtung am Gebläse die Dichtlippe und/oder der Winkelabschnitt in axialer Richtung vorgespannt vorhanden sind.

Bevorzugterweise weist die Dichtlippe eine Kontaktfläche auf. Beispielsweise ist im angeordneten Zustand der Wellendichtung am Gebläse die Dichtlippe mit der Kontaktfläche anliegend am Gebläseradgehäuse vorhanden. Vorteilhafterweise ist die Wellendichtung derart elastisch ausgebildet, dass im angeordneten Zustand der Wellendichtung das zweite Ende der Dichtlippe durch eine Kraft zwischen dem Gebläseradgehäuse und dem Motorgehäuse bewegbar vorhanden ist, sodass sowohl bei einem Überdruck, als auch bei einem Unterdruck im Gebläseradgehäuse eine Dichtheit zwischen dem Gebläseradgehäuse und dem Motorgehäuse durch die Wellendichtung gewährleistet ist.

Beispielsweise ist die Wellendichtung derart ausgebildet, dass bei einem Überdruck im Gebläseradgehäuse eine Anpresskraft der Dichtlippe an das Gebläseradgehäuse vergleichsweise erhöht ist. Zum Beispiel ist die Wellendichtung derart ausgebildet, dass bei einem steigenden Überdruck im Gebläseradgehäuse eine Anpresskraft der Dichtlippe an das Gebläseradgehäuse sich ebenfalls erhöht. Hierdurch ist eine Dichtwirkung der Wellendichtung verbessert.

Zum Beispiel ist die Wellendichtung derart ausgebildet, dass bei einem Unterdruck im Gebläseradgehäuse eine Anpresskraft der Dichtlippe an das Gebläseradgehäuse vergleichsweise erhöht ist. Zum Beispiel ist die Wellendichtung derart ausgebildet, dass bei einem steigenden Unterdruck im Gebläseradgehäuse eine Anpresskraft der Dichtlippe an das Gebläseradgehäuse sich ebenfalls erhöht. Hierdurch ist eine Dichtwirkung der Wellendichtung verbessert. Beispielsweise wirkt ein Unterdruck der elastischen Verformung der Wellendichtung aufgrund ihrer Anordnung am Gebläse in axialer Richtung entgegen.

Weiter wird vorgeschlagen, dass die Wellendichtung achsensymmetrisch ausgebildet ist. Vorteilhafterweise ist die Wellendichtung rotationssymmetrisch ausgebildet. Vorteilhafterweise ist die Symmetrieachse als eine Rotationsachse der Wellendichtung vorhanden. Hierdurch ist eine Montage der Wellendichtung vereinfacht.

Ebenfalls ist es von Vorteil, dass die Wellendichtung integral vorhanden ist. Beispielsweise ist die Wellendichtung einstückig ausgebildet. Vorteilhafterweise erstreckt sich die Wellendichtung in radialer Richtung zur Symmetrieachse ausgehend vom ersten Ende des Kragens bis zum zweiten Ende der Dichtlippe durchgehend. Hierdurch ist die Wellendichtung vergleichsweise kostengünstig herstellbar.

Beispielsweise ist die Wellendichtung aus einem Kunststoff oder einem Gummimaterial ausgebildet. Vorteilhafterweise ist die Wellendichtung aus einem vergleichsweise weichen Kunststoffmaterial und/oder Gummi ausgebildet. Hierdurch sind Anforderungen an die Geräuschentwicklung beim Betrieb des Gebläses im angeordneten Zustand der Wellendichtung am Gebläse erfüllbar.

In einer vorteilhaften Modifikation weist die Wellendichtung eine Aufnahme auf, wobei die Aufnahme dazu ausgebildet ist, entlang der Symmetrieachse in Richtung der Unterseite ein Wellenlager des Gebläses anzuordnen, wobei der Kragen eine Anlagefläche bildet. Beispielsweise dient das Wellenlager zur Lagerung der Motorwelle an der Wellendichtung. Beispielsweise erstreckt sich die Anlagefläche in radialer Richtung. Zum Beispiel liegt an der Anlagefläche im angeordneten Zustand der Wellendichtung am Gebläse das Wellenlager an. Hierdurch ist eine Montage eines Wellenlagers mit der Wellendichtung vereinfacht.

Vorteilhafterweise liegt im angeordneten Zustand der Wellendichtung am Gebläse eine Wellfeder oder eine Wellenfeder des Wellenlagers an der Anlagefläche des Kragens auf oder an. Beispielsweise bilden der Nutabschnitt und der Kragen zusammen die Aufnahme. Bevorzugterweise ist der Nutabschnitt auf seiner der Symmetrieachse zugewandten Seite in Form einer Presspassung vorhanden, sodass das Wellenlager an den Nutabschnitt, insbesondere an die Presspassung des Nutabschnitts, klemmbar ist. Beispielsweise schließt der Kragen z.B. unmittelbar mit einem zweiten Ende des Kragens an den Nutabschnitt an. Vorteilhafterweise sind das erste und das zweite Ende des Kragens gegenüberliegend und beabstandet zueinander vorhanden.

Außerdem wird vorgeschlagen, dass der Nutabschnitt eine Montageöffnung aufweist, wobei die Montageöffnung dazu ausgebildet ist, die Wellendichtung in axialer Richtung entlang der Symmetrieachse in Richtung Unterseite auf ein Motorgehäuse des Gebläses aufzustecken. Hierdurch ist die Wellendichtung vergleichsweise einfach mit dem Motorgehäuse verbindbar, insbesondere ist hierdurch eine Montage der Wellendichtung erleichtert. Die Montageöffnung ist beispielsweise als eine ringförmige, beispielsweise zylinderringförmige Ausnehmung vorhanden.

Von Vorteil ist auch, dass die Anlagefläche des Kragens und das zweite Ende der Dichtlippe die Ebene aufspannen. Beispielsweise spannen ein Oberflächenbereich der Anlagefläche des Kragens und das zweite Ende der Dichtlippe die Ebene auf. Vorteilhafterweise spannen eine dem Winkelabschnitt abgewandte Oberfläche der Dichtlippe und der Kragen die Ebene auf. Bevorzugterweise spannen eine dem Winkelabschnitt abgewandte Oberfläche des zweiten Endes der Dichtlippe und der Kragen die Ebene auf.

In einer vorteilhaften Ausbildung der Wellendichtung ist in axialer Erstreckung der Wellendichtung gesehen die zweite Verbindungsstelle zwischen dem zweiten Ende der Dichtlippe und der erste Verbindungsstelle vorhanden ist.

Vorteilhaft ist ebenfalls, dass die zweite Verbindungsstelle und/oder das erste Ende der Dichtlippe einen äußersten Rand der Wellendichtung in radialer Erstreckung der Wellendichtung gesehen bildet.

Weiter wird vorgeschlagen, dass die erste Verbindungsstelle in axialer Erstreckung der Wellendichtung gesehen einen äußersten Rand der Wellendichtung an der Unterseite bildet. Denkbar ist auch, dass der Kragen und/oder eine der Unterseite zugewandte Seite des Nutabschnitts in axialer Erstreckung der Wellendichtung gesehen einen äußersten Rand der Wellendichtung an der Unterseite bildet. Vorstellbar ist, dass die der Unterseite zugewandte Seite des Nutabschnitts im Bereich der Unterseite vorhanden ist und damit diese Seite den am weitesten in den Unterseitenbereich hineinragenden Teil des Nutabschnitts bildet. Hierdurch ist die Wellendichtung vorteilhaft auf eine Geometrie des Gebläses abgestimmt.

Auch erweist es sich von Vorteil, dass in radialer Erstreckung der Wellendichtung gesehen das zweite Ende der Dichtlippe zwischen der zweiten Verbindungsstelle und der ersten Verbindungsstelle vorhanden ist.

Eine vorteilhafte Ausbildungsform der Erfindung ist ein Gebläse, insbesondere Radialgebläse, mit einer Wellendichtung nach einer der vorangegangen beschriebenen Ausbildungsformen.

Vorteilhafterweise umfasst das Gebläse einen Gebläsemotor, ein Gebläsemotorgehäuse, ein Gebläserad und ein Gebläseradgehäuse. Beispielsweise umfasst das Gebläseradgehäuse einen Wellendurchbruch zur Anordnung einer Motorwelle des Gebläsemotors. Beispielsweise ist das Gebläse als ein Gasheizgebläse, z.B. als ein Gasheißgerät ausgebildet. Durch die vorteilhafte Ausbildung des Gebläses ist ein Verhindern des Austretens von einem insbesondere leicht entzündlichen Luft-Gasgemisch aus dem Gebläse, im angeordneten Zustand der Wellendichtung am Gebläse, verbessert. Bevorzugterweise ist hierdurch die Gasdichtheit im Betrieb des Gebläses durchgehend gewährleistet. Vorteilhafterweise ist der Gebläsemotor vom Gebläsemotorgehäuse umhüllt vorhanden. Beispielsweise ist das Gebläserad vom Gebläseradgehäuse umhüllt vorhanden. Zum Beispiel ist das Gebläserad über die Motorwelle mit dem Gebläsemotor verbunden.

### Figurenbeschreibung

Die Erfindung wird ausschließlich durch die Ansprüche definiert. Ein Ausführungsbeispiel der Erfindung wird anhand der nachstehenden Zeichnungen unter Angabe von weiteren Einzelheiten und Vorteilen näher erläutert.

Es zeigen:
- Figur 1: eine perspektivische Querschnittsansicht einer Wellendichtung, wobei der Querschnitt der Wellendichtung parallel zur Rotationsachse der Wellendichtung durch die Wellendichtung verläuft und
- Figur 2: ein Teilausschnitt einer Querschnittsansicht einer an einem Gebläse angeordneten Wellendichtung gemäß Figur 1, wobei der Querschnitt parallel zur Rotationsachse der Wellendichtung durch die Wellendichtung verläuft.

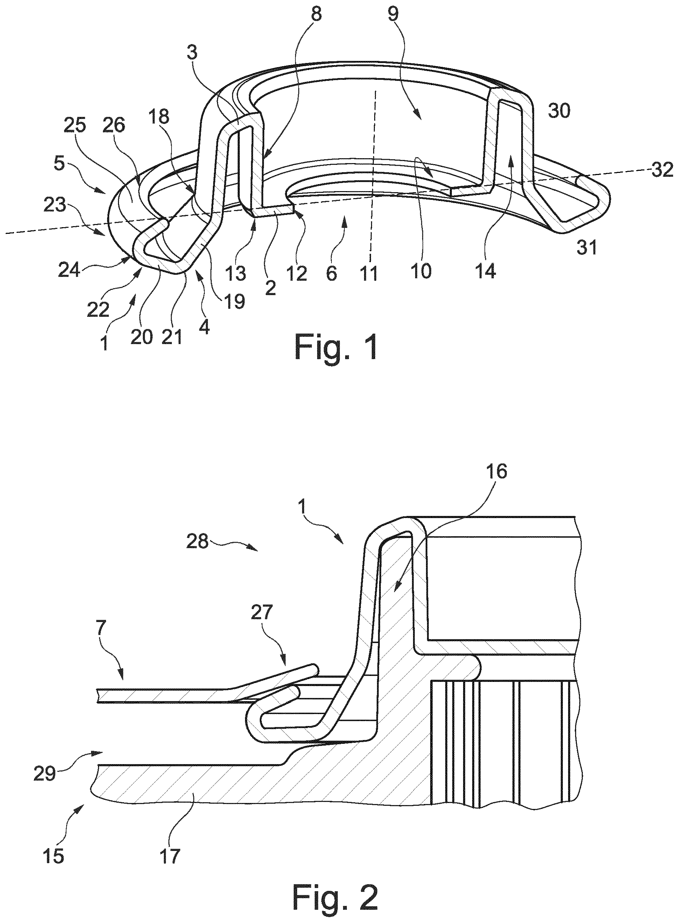

In Figur 1 ist eine Wellendichtung 1 gezeigt. Die Wellendichtung 1 umfasst einen Kragen 2, eine Nutabschnitt 3, einen Winkelabschnitt 4 und eine Dichtlippe 5.

Beispielsweise bilden der Nutabschnitt 3 und der Kragen 2 eine Aufnahme 9 zu Anordnung eines Wellenlagers (nicht gezeigt). Vorteilhafterweise bildet eine Innenseite 8 des Nutabschnitts 3 eine Anlageflächen zu Anordnung des Wellenlagers, insbesondere in Form einer Presspassung. Beispielweise besitzt der Kragen 2 eine Anlageflächen 10 zur Anlage des Wellenlagers. Vorteilhafterweise umschließt der Kragen 2 eine Durchgangsöffnung 6. Zum Beispiel greift im angeordneten Zustand der Wellendichtung 1 an einem Gebläseradgehäuse 7 eine Motorwelle durch die Durchgangsöffnung 6 und die Aufnahme 9 hindurch (nicht gezeigt).

Bevorzugterweise ist die Wellendichtung 1 rotationssymmetrisch ausgebildet, insbesondere rotationssymmetrisch um eine Symmetrieachse 11.

Der Kragen 2 umfasst ein erstes Ende 12, welches relativ zur Symmetrieachse 11 gesehen in radialer Richtung innenliegend am Kragen 2 vorhanden ist und ein zweites Ende 13, welches relativ zur Symmetrieachse 11 gesehen in radialer Richtung außen liegend am Kragen 2 vorhanden ist. Vorteilhafterweise schließt am zweiten Ende 13 des Kragens 2 unmittelbar der Nutabschnitt 3 an.

Bevorzugterweise ist der Nutabschnitt 3 in einem Querschnitt gesehen U-förmig ausgebildet. Beispielsweise umfasst der Nutabschnitt 3 eine Montageöffnung 14, an welcher im angeordneten Zustand an einen Gebläse 15 ein Endabschnitt 16 eines Motorgehäuses 17 eingreifend anordenbar ist, sodass die Wellendichtung 1 auf das Motorgehäuse aufgesteckt vorhanden ist (siehe Figur 2). Vorteilhafterweise ist die Wellendichtung 1 mit dem Nutabschnitt 3 derart auf das Motorgehäuse 17 aufsteckbar vorhanden, dass im aufgesteckten Zustand die Wellendichtung 1 abdichtend am Motorgehäuse 17 anliegt.

Beispielsweise ist an einem relativ zur Symmetrieachse 11 gesehen radial außen liegenden Ende 18 des Nutabschnitts 3 insbesondere unmittelbar anschließend der Winkelabschnitt 4 vorhanden. Vorteilhafterweise umfasst der Winkelabschnitt 4 einen ersten Winkelabschnittsbereich 19 und einen zweiten Winkelabschnittsbereich 20. Beispielsweise schließt der Winkelabschnitt 4 mit dem ersten Winkelabschnittsbereich 19 an den Nutabschnitt 3 an. Vorteilhafterweise ist der erste Winkelabschnittsbereich 19 relativ zum Ende 18 des Nutabschnitts 3 in einem Querschnitt der Wellendichtung 1 betrachtet abgewinkelt vorhanden. Zum Beispiel sind der erste Winkelabschnittsbereich 19 und der zweite Winkelabschnittsbereich 20 über eine erste Verbindungsstelle 21 miteinander verbunden. Vorteilhafterweise sind der erste Winkelabschnittsbereich 19 und der zweite Winkelabschnittsbereich 20 über die erste Verbindungsstelle 21 unmittelbar miteinander verbunden. Bevorzugterweise sind der erste Winkelabschnittsbereich 19 und der zweite Winkelabschnittsbereich 20 in einem Querschnitt der Wellendichtung 1 betrachtet zueinander abgewinkelt vorhanden. Vorteilhafterweise sind der erste Winkelabschnittsbereich 19 und der zweite Winkelabschnittsbereich 20 um die Verbindungsstelle 21 relativ zueinander bewegbar. Beispielsweise ist die Verbindungsstelle 21 scharnierartig ausgebildet.

Bevorzugterweise schließt an ein Ende 22 des zweiten Winkelabschnittsbereichs 20, welches relativ zur Symmetrieachse 11 radial außen liegend am Winkelabschnittsbereich 20 vorhanden ist, die Dichtlippe 5 an. Beispielsweise schließt an das Ende 22 des zweiten Winkelabschnittsbereichs 20 die Dichtlippe 5 mit einem ersten Ende 23 an. Zum Beispiel sind das erste Ende 23 der Dichtlippe 5 und das Ende 22 des zweiten Winkelabschnittsbereichs 20 über eine zweite Verbindungsstelle 24 miteinander verbunden. Vorteilhafterweise schließt die Dichtlippe 5 unmittelbar an den Winkelabschnitt 4, insbesondere an das Ende 22 des zweiten Winkelabschnittsbereichs 20 an. Beispielsweise verbindet die zweite Verbindungsstelle 24 den Winkelabschnitt 4 mit der Dichtlippe 5 unmittelbar.

Die Dichtlippe 5 ist relativ zum Winkelabschnitt 4, insbesondere zum zweiten Winkelabschnittsbereich 20, abgewinkelt vorhanden. Vorteilhafterweise sind die Dichtlippe 5 und der Winkelabschnitt 4 relativ zueinander bewegbar. Beispielsweise ist die zweite Verbindungsstelle 24 scharnierartig ausgebildet.

Vorteilhafterweise umfasst die Dichtlippe 5 eine Kontaktfläche 25. Beispielsweise erstreckt sich die Kontaktfläche 25 in einem Bereich zwischen dem ersten Ende 23 der Dichtlippe 5 und einem zweiten Ende 26 der Dichtlippe 5. Bevorzugterweise ist die Kontaktfläche 25 derart ausgebildet, dass im angeordneten Zustand der Wellendichtung 1 am Gebläse 15 die Kontaktfläche 25 dicht an einem Endabschnitt 27 des Gebläseradgehäuses 7 anliegt, sodass ein Inneres 28 des Gebläseradgehäuses 7 gegenüber einer Umgebung 29 des Gebläses 15 abgedichtet vorhanden ist.

Das zweite Ende 26 der Dichtlippe 5 und das erste Ende 12 des Kragens 2 spannen eine Ebene 32 auf.

Beispielsweise ragt der Nutabschnitt 3 in axialer Richtung relativ zur Symmetrieachse 11 gesehen in Richtung einer Oberseite 30 der Ebene 32. Zum Beispiel befindet sich die Dichtlippe 5 und/oder der Winkelabschnitt 4 in axialer Richtung relativ zur Symmetrieachse 11 gesehen auf einer Unterseite 31 der Ebene 32. Beispielsweise befindet sich zumindest ein überwiegender Teil der Dichtlippe 5 und/oder ein überwiegender Teil des Winkelabschnitts 4 in axialer Richtung relativ zur Symmetrieachse 11 gesehen auf der Unterseite 31.

Die Ebene 32 trennt die Oberseite 30 von der Unterseite 31.

Beispielsweise ist die Dichtlippe 5 im eingebauten Zustand am Gebläse 15 in axialer Richtung vorgespannt vorhanden. Dadurch ist ein Kontakt zwischen der Kontaktfläche 25 und dem Endabschnitt 27 hergestellt und eine Dichtungswirkung zwischen der Kontaktfläche 25 und dem Endabschnitt 27 realisiert.

Steigt beispielsweise im Inneren 28 ein Druck gegenüber der Umgebung 29 an (Überdruck), führt dies dazu, dass die Kontaktfläche 25 stärker gegen den Endabschnitt 27 gepresst wird. Beispielswiese wird durch den Überdruck das Ende 26 vom Winkelabschnitt 20 in axialer Richtung wegbewegt. Beispielsweise stützt sich der Winkelabschnittbereich 20 und die Verbindungsstelle 21 bei weiter steigenden Innendruck am Motorgehäuse 17 ab, womit ebenfalls ein höherer Anpressdruck der Kontaktfläche 25 am Endabschnitt 27 erzeugt ist.

Zum Beispiel funktioniert das vorangegangen genannte Prinzip auch gegenläufig. Liegt zum Beispiel im Inneren 28 ein niedrigerer Druck als in der Umgebung 29 vor (Unterdruck), wirkt beispielsweise auf die Winkelabschnittsbereiche 19, 20 und die Verbindungsstelle 21 eine Kraft in axialer Richtung in Richtung Kontaktfläche 25, welche über die Verbindungsstelle 24 auf die Kontaktfläche 25 übertragen wird, womit der Anpressdruck der Kontaktfläche 25 am Endabschnitt 27 erhöht ist.

### Bezugszeichenliste

- 1: Wellendichtung
- 2: Kragen
- 3: Nutabschnitt
- 4: Winkelabschnitt
- 5: Dichtlippe
- 6: Durchgangsöffnung
- 7: Gebläseradgehäuse
- 8: Innenseite
- 9: Aufnahme
- 10: Anlagefläche
- 11: Symmetrieachse
- 12: Ende
- 13: Ende
- 14: Montageöffnung
- 15: Gebläse
- 16: Endabschnitt
- 17: Motorgehäuse
- 18: Ende
- 19: Winkelabschnittsbereich
- 20: Winkelabschnittsbereich
- 21: Verbindungsstelle
- 22: Ende
- 23: Ende
- 24: Verbindungsstelle
- 25: Kontaktfläche
- 26: Ende
- 27: Endabschnitt
- 28: Inneres
- 29: Umgebung
- 30: Oberseite
- 31: Unterseite
- 32: Ebene

## Patentansprüche

1. Wellendichtung (1) zum Abdichten eines Wellendurchbruchs eines Gebläses (15), insbesondere Wellendichtung (1) zum Abdichten eines Wellendurchbruchs eines Radialgebläses, wobei die Wellendichtung (1) eine Symmetrieachse (11) aufweist, wobei die Wellendichtung (1) an einem in Richtung der Symmetrieachse (11) radial innenliegenden ersten Ende einen Kragen (2) aufweist, wobei die Wellendichtung (1) ausgehend von dem Kragen (2) in radialer Richtung weg von der Symmetrieachse (11) aufeinanderfolgend einen Nutabschnitt (3), einen Winkelabschnitt (4) und eine Dichtlippe (5) umfasst, wobei die Dichtlippe (5) mit einem ersten Ende (23) mit dem Winkelabschnitt (4) verbunden und abgewinkelt zum Winkelabschnitt (4) vorhanden ist, wobei die Dichtlippe (5) ein zweites Ende (26) aufweist, welches beabstandet zum Winkelabschnitt (4) vorhanden ist, wobei ein erstes Ende (12) des Kragens (2) und das zweite Ende (26) der Dichtlippe (5) eine Ebene (32) definieren, wobei der Winkelabschnitt (4) auf einer Unterseite (31) der Ebene (32) und der Nutabschnitt (3) auf einer Oberseite (30) der Ebene (32) vorhanden ist,
**dadurch gekennzeichnet, dass**
ausgehend vom Winkelabschnitt (4) die Dichtlippe (5) sich in radialer Richtung schräg verlaufend in Richtung Symmetrieachse (11) erstreckt.

2. Wellendichtung (1) nach dem vorangegangenen Anspruch 1, **dadurch gekennzeichnet, dass** die Wellendichtung (1) achsensymmetrisch, insbesondere rotationssymmetrisch, ausgebildet ist.

3. Wellendichtung (1) nach einem der vorangegangenen Ansprüche, **dadurch gekennzeichnet, dass** die Wellendichtung (1) integral vorhanden ist.

4. Wellendichtung (1) nach einem der vorangegangenen Ansprüche, **dadurch gekennzeichnet, dass** die Wellendichtung (1) eine Aufnahme (9) aufweist, wobei die Aufnahme (9) dazu ausgebildet ist, entlang der Symmetrieachse (11) in Richtung der Unterseite ein Wellenlager des Gebläses (15) zur Lagerung der Motorwelle an der Wellendichtung (1) anzuordnen, wobei der Kragen (2) eine Anlagefläche (10) bildet, wobei die Anlagefläche (10) sich in radialer Richtung erstreckt, wobei an der Anlagefläche (10) im angeordneten Zustand der Wellendichtung (1) am Gebläse (15) das Wellenlager anliegt.

5. Wellendichtung (1) nach einem der vorangegangenen Ansprüche, **dadurch gekennzeichnet, dass** der Nutabschnitt eine Montageöffnung aufweist, wobei die Montageöffnung dazu ausgebildet ist, die Wellendichtung (1) in axialer Richtung entlang der Symmetrieachse (11) in Richtung Unterseite auf ein Motorgehäuse des Gebläses aufzustecken.

6. Wellendichtung (1) nach dem vorangegangenen Anspruch 4,
**dadurch gekennzeichnet, dass** die Anlagefläche (10) des Kragens (2) und das zweite Ende (26) der Dichtlippe (5) die Ebene (32) aufspannen.

7. Wellendichtung (1) nach einem der vorangegangenen Ansprüche, **dadurch gekennzeichnet, dass** eine zweite Verbindungsstelle (24) das erste Ende (23) der Dichtlippe (5) mit dem Winkelabschnitt (4) verbindet, wobei die zweite Verbindungsstelle (24) und/oder das erste Ende (23) der Dichtlippe (5) einen äußersten Rand der Wellendichtung (1) in radialer Erstreckung der Wellendichtung (1) gesehen bildet.

8. Wellendichtung (1) nach einem der vorangegangenen Ansprüche, **dadurch gekennzeichnet, dass** der Winkelabschnitt (4) einen ersten Winkelabschnittsbereich (19) und einen zweiten Winkelabschnittsbereich (20) aufweist die über eine erste Verbindungsstelle (21) miteinander verbunden sind, wobei die erste Verbindungsstelle (21) in axialer Erstreckung der Wellendichtung (1) gesehen einen äußersten Rand der Wellendichtung (1) an der Unterseite (31) bildet.

9. Wellendichtung (1) nach den vorangegangenen Ansprüchen 7 und 8, **dadurch gekennzeichnet, dass** in radialer Erstreckung der Wellendichtung (1) gesehen das zweite Ende (26) der Dichtlippe (5) zwischen der zweiten Verbindungsstelle (24) und der ersten Verbindungsstelle (21) vorhanden ist.

10. Wellendichtung (1) nach den vorangegangenen Ansprüchen 7 und 8, **dadurch gekennzeichnet, dass** in axialer Erstreckung der Wellendichtung (1) gesehen die zweite Verbindungsstelle (24) zwischen dem zweiten Ende (26) der Dichtlippe (5) und der erste Verbindungsstelle (21) vorhanden ist.

11. Wellendichtung (1) nach einem der vorangegangenen Ansprüche, **dadurch gekennzeichnet, dass** die Wellendichtung (1) selbstverstärkend ausgebildet ist, sodass im angeordneten Zustand der Wellendichtung (1) am Gebläse (15) und bei steigendem Druck im Innenraum eines Gebläseradgehäuses des Gebläses (15) die Dichtwirkung der Wellendichtung (1) ansteigt.

12. Gebläse (15), insbesondere Radialgebläse, mit einer Wellendichtung (1) nach einem der vorangegangenen Ansprüche.

## Claims

1. Shaft seal (1) for sealing off a shaft aperture of a blower (15), in particular a shaft seal (1) for sealing off a shaft aperture of a radial blower, wherein the shaft seal (1) has an axis of symmetry (11), wherein the shaft seal (1) has a collar (2) at a radially inner first end in the direction of the axis of symmetry (11), wherein, proceeding from the collar (2), the shaft seal (1) comprises in succession away from the axis of symmetry (11) in a radial direction a groove portion (3), an angular portion (4) and a sealing lip (5), wherein the sealing lip (5) is connected by way of a first end (23) to the angular portion (4) and is provided so as to be angled away from the angular portion (4), wherein the sealing lip (5) has a second end (26) which is provided spaced apart from the angular portion (4), wherein a first end (12) of the collar (2) and the second end (26) of the sealing lip (5) define a plane (32), wherein the angular portion (4) is provided on a bottom side (31) of the plane (32) and the groove portion (3) is provided on a top side (30) of the plane (32),
**characterized in that**,
proceeding from the angular portion (4), the sealing lip (5) extends in a radially obliquely extending manner in the direction of the axis of symmetry (11) .

2. Shaft seal (1) according to preceding Claim 1, **characterized in that** the shaft seal (1) is of axially symmetrical, in particular rotationally symmetrical, form.

3. Shaft seal (1) according to either of the preceding claims,
**characterized in that** the shaft seal (1) is provided in an integral manner.

4. Shaft seal (1) according to one of the preceding claims,
**characterized in that** the shaft seal (1) has a receptacle (9), wherein the receptacle (9) is configured for arrangement in the direction of the bottom side along the axis of symmetry (11) of a shaft bearing of the blower (15) for mounting the motor shaft on the shaft seal (1), wherein the collar (2) forms an abutment surface (10), wherein the abutment surface (10) extends radially, wherein, in the arranged state of the shaft seal (1) on the blower (15), the shaft bearing abuts against the abutment surface (10).

5. Shaft seal (1) according to one of the preceding claims,
**characterized in that** the groove portion has a fitting opening, wherein the fitting opening is configured for plugging of the shaft seal (1) onto a motor housing of the blower in the direction of the bottom side axially along the axis of symmetry (11) .

6. Shaft seal (1) according to preceding Claim 4, **characterized in that** the abutment surface (10) of the collar (2) and the second end (26) of the sealing lip (5) span the plane (32).

7. Shaft seal (1) according to one of the preceding claims,
**characterized in that** a second connection point (24) connects the first end (23) of the sealing lip (5) to the angular portion (4), wherein the second connection point (24) and/or the first end (23) of the sealing lip (5) form(s) an outermost edge of the shaft seal (1), when seen in the radial extent of the shaft seal (1).

8. Shaft seal (1) according to one of the preceding claims,
**characterized in that** the angular portion (4) has a first angular-portion region (19) and a second angular-portion region (20) which are connected to one another via a first connection point (21), wherein the first connection point (21) forms an outermost edge of the shaft seal (1) on the bottom side (31), when seen in the axial extent of the shaft seal (1).

9. Shaft seal (1) according to preceding Claims 7 and 8,
**characterized in that** the second end (26) of the sealing lip (5) is provided between the second connection point (24) and the first connection point (21), when seen in the radial extent of the shaft seal (1).

10. Shaft seal (1) according to preceding Claims 7 and 8,
**characterized in that** the second connection point (24) is provided between the second end (26) of the sealing lip (5) and the first connection point (21), when seen in the axial extent of the shaft seal (1).

11. Shaft seal (1) according to one of the preceding claims,
**characterized in that** the shaft seal (1) is of self-reinforcing form such that, in the arranged state of the shaft seal (1) on the blower (15) and in the case of increasing pressure in the interior space of a blower-impeller housing of the blower (15), the sealing action of the shaft seal (1) increases.

12. Blower (15), in particular a radial blower, having a shaft seal (1) according to one of the preceding claims.

## Revendications

1. Joint d'étanchéité (1) pour arbre, destiné à rendre étanche un passage d'arbre d'une soufflante (15), en particulier un joint d'étanchéité (1) pour arbre destiné à rendre étanche un passage d'arbre d'une soufflante radiale, le joint d'étanchéité (1) pour arbre présentant un axe de symétrie (11), le joint d'étanchéité (1) pour arbre présentant une collerette (2) à une première extrémité située radialement à l'intérieur dans la direction de l'axe de symétrie (11), le joint d'étanchéité (1) pour arbre comprenant, en partant du collerette (2) dans la direction radiale s'éloignant de l'axe de symétrie (11), successivement une partie (3) formant rainure, une partie angulée (4) et une lèvre d'étanchéité (5),
la lèvre d'étanchéité (5) étant reliée par une première extrémité (23) à la partie angulée (4) et s'étendant selon un angle par rapport à la partie angulée (4), la lèvre d'étanchéité (5) présentant une deuxième extrémité (26) qui se trouve à distance de la partie angulée (4), une première extrémité (12) de la collerette (2) et la deuxième extrémité (26) de la lèvre d'étanchéité (5) définissant un plan (32), la partie angulée (4) se trouvant sur une face inférieure (31) du plan (32) et la partie (3) formant rainure se trouvant sur une face supérieure (30) du plan (32),
**caractérisé en ce qu'**à partir de la partie angulée (4), la lèvre d'étanchéité (5) s'étend en direction radiale en s'inclinant en direction de l'axe de symétrie (11).

2. Joint d'étanchéité (1) pour arbre selon la revendication 1 précédente,
**caractérisé en ce que** le joint d'étanchéité (1) pour arbre est conçu avec une symétrie axiale, en particulier une symétrie de révolution.

3. Joint d'étanchéité (1) pour arbre selon l'une des revendications précédentes,
**caractérisé en ce que** le joint d'étanchéité (1) pour arbre est formé d'un seul tenant.

4. Joint d'étanchéité (1) pour arbre selon l'une des revendications précédentes,
**caractérisé en ce que** le joint d'étanchéité (1) pour arbre présente un logement (9), le logement (9) étant conçu pour disposer, le long de l'axe de symétrie (11) en direction de la face inférieure, un palier d'arbre de la soufflante (15) afin de supporter l'arbre du moteur sur le joint d'étanchéité (1) pour arbre, la collerette (2) formant une surface d'appui (10), la surface d'appui (10) s'étendant dans la direction radiale, le palier d'arbre s'appliquant contre la surface d'appui (10) lorsque le joint d'étanchéité (1) pour arbre est agencé sur la soufflante (15).

5. Joint d'étanchéité (1) pour arbre selon l'une des revendications précédentes,
**caractérisé en ce que** la partie formant rainure présente une ouverture de montage, l'ouverture de montage étant conçue pour emboîter le joint d'étanchéité (1) pour arbre dans la direction axiale le long de l'axe de symétrie (11) en direction du côté inférieur d'un boîtier de moteur de la soufflante.

6. Joint d'étanchéité (1) pour arbre selon la revendication 4 précédente,
**caractérisé en ce que** la surface d'appui (10) de la collerette (2) et la deuxième extrémité (26) de la lèvre d'étanchéité (5) s'étendent sur le plan (32).

7. Joint d'étanchéité (1) pour arbre selon l'une des revendications précédentes,
**caractérisé en ce qu'**un deuxième point de jonction (24) relie la première extrémité (23) de la lèvre d'étanchéité (5) à la partie angulée (4), le deuxième point de jonction (24) et/ou la première extrémité (23) de la lèvre d'étanchéité (5) formant un bord extérieur du joint d'étanchéité (1) pour arbre vu selon l'extension radiale du joint d'étanchéité (1) pour arbre.

8. Joint d'étanchéité (1) pour arbre selon l'une des revendications précédentes,
**caractérisé en ce que** la partie angulée (4) présente une première zone (19) de partie angulée et une deuxième zone (20) de partie angulée qui sont reliées l'une à l'autre par un premier point de jonction (21), le premier point de jonction (21) formant, vu selon l'extension axiale du joint d'étanchéité (1) pour arbre, un bord le plus extérieur du joint d'étanchéité (1) pour arbre sur la face inférieure (31).

9. Joint d'étanchéité (1) pour arbre selon les revendications 7 et 8 précédentes,
**caractérisé en ce que**, vu selon l'extension radiale du joint d'étanchéité (1) pour arbre, la deuxième extrémité (26) de la lèvre d'étanchéité (5) se trouve entre le deuxième point de jonction (24) et le premier point de jonction (21).

10. Joint d'étanchéité (1) pour arbre selon les revendications 7 et 8 précédentes,
**caractérisé en ce que**, vu selon l'extension axiale du joint d'étanchéité (1) pour arbre, le deuxième point de jonction (24) se trouve entre la deuxième extrémité (26) de la lèvre d'étanchéité (5) et le premier point de jonction (21).

11. Joint d'étanchéité (1) pour arbre selon l'une des revendications précédentes,
**caractérisé en ce que** le joint d'étanchéité (1) pour arbre est conçu de manière à s'auto-renforcer, de sorte que lorsque le joint d'étanchéité (1) pour arbre est disposé sur la soufflante (15) et lorsque la pression augmente à l'intérieur d'un boîtier de roue de soufflante de la soufflante (15), l'effet d'étanchéité du joint d'étanchéité (1) pour arbre augmente.

12. Soufflante (15), en particulier soufflante radiale, avec un joint d'étanchéité (1) pour arbre selon l'une des revendications précédentes.
